# EUROPÄISCHE PATENTSCHRIFT

(11) **EP 2 774 468 B1**
(45) Veröffentlichungstag und Bekanntmachung des Hinweises auf die Patenterteilung: **20.07.2016**
(21) Anmeldenummer: 14000736.0
(22) Anmeldetag: 01.03.2014
(51) Int. Cl.: A01D 34/416

(54) **Fadenmähkopf für einen Freischneider**
String mower head for a string cutter
Tête faucheuse pour une débroussailleuse

(30) Priorität: 06.03.2013 DE 102013003856
(43) Veröffentlichungstag der Anmeldung: 10.09.2014
(73) Patentinhaber: Andreas Stihl AG & Co. KG, 71336 Waiblingen (DE)
(72) Erfinder: Weimer, Ina, D-70178 Stuttgart (DE); Keller, Katharina, D-73663 Berglen (DE); Neumaier, Thomas, D-71364 Winnenden (DE); Stark, Thomas, D-71336 Waiblingen (DE); Häberlein, Jürgen, D-71364 Winnenden (DE)
(74) Vertreter: Wasmuth, Rolf

(56) Entgegenhaltungen:
- EP-A1- 1 421 840
- EP-A1- 2 380 424
- EP-B1- 0 824 854
- EP-B1- 1 586 231

## Beschreibung

Die Erfindung betrifft einen Fadenmähkopf für einen Freischneider mit einem in einem Grundkörper des Fadenmähkopfes geklemmt gehaltenen, länglichen Schneidfaden nach dem Oberbegriff des Anspruchs 1.

Aus der EP 0 824 854 B1 ist ein Fadenmähkopf bekannt, in dem der Schneidfaden mittels eines federbelasteten Klemmkörpers in der Fadenöffnung gehalten wird. Der Klemmkörper ist um eine parallel zur Drehachse liegende Verschwenkachse verschwenkbar, wobei die auf den Faden und den Klemmkörper wirkende Fliehkraft die Klemmung durch den Klemmkörper erhöht.

Aus der EP 1 586 231 B1 ist ein gattungsgemäßer Fadenmähkopf bekannt, bei dem der Klemmkörper, der Verschwenkbolzen des Klemmkörpers und eine Austrittshülse für den Schneidfaden als gemeinsames zylindrisches Bauteil ausgebildet sind. Der Verschwenkbolzen liegt in einer.zur Schnittebene der Schneidfäden etwa parallelen Ebene, wobei der Klemmkörper durch eine Klemmfeder in seine Klemmstellung federbelastet ist. In der. Klemmstellung des Klemmkörpers wird der Schneidfaden zwischen einer gehäusefesten Klemmfläche und dem Klemmkörper gehalten, wobei eine am Schneidfaden wirkende Fliehkraft den in der Klemmstellung liegenden Klemmkörper in Klemmrichtung belastet, die Klemmung also verstärkt. Die Klemmfläche und die Lagerung der Verschwenkachse des Klemmkörpers sind in dem gemeinsamen, zylindrischen Bauteil ausgebildet, welches sich im Grundkörper des Fadenmähkopfes um eine zur Drehachse parallele Achse bewegen kann.

Der Aufbau der Klemmvorrichtung ist aufwendig, wobei die Drehlagerung der Klemmvorrichtung im Grundkörper des Fadenmähkopfes störanfällig ist.

Der Erfindung liegt die Aufgabe zugrunde, einen Fadenmähkopf für einen Freischneider der gattungsgemäßen Art derart mit einer Klemmvorrichtung auszubilden, dass bei einfachem Aufbau eine sichere Klemmung des Schneidfadens auch über eine lange Betriebsdauer gewährleistet ist.

Die Aufgabe wird nach den Merkmalen des Anspruchs 1 gelöst.

Der Klemmkörper, die Klemmfeder und der Verschwenkbolzen sind an einem gemeinsamen Bauteil ausgebildet, welches als U-förmiger Bügel gestaltet ist. Der Klemmkörper liegt zwischen den Schenkeln des Bügels, und der Verschwenkbolzen ist in den Schenkelenden des U-förmigen Bügels gelagert. Zugleich ist an dem die Schenkel verbindenden Steg des U-förmigen Bügels die Klemmfläche für den Schneidfaden ausgebildet, wodurch die Klemmvorrichtung als selbstständige modulare Baueinheit vormontiert werden kann und bei der Endmontage des Fadenmähkopfes lediglich in eine Aufnahmetasche des aus Kunststoff bestehenden Grundkörpers eingeschoben werden muss. Bei einfachem Aufbau und einfacher Montage ist eine Klemmvorrichtung in einem Fadenmähkopf geschaffen, die auch über eine lange Betriebsdauer eine zuverlässige Klemmung eines Schneidfadens gewährleistet, wobei alle im Betrieb auf die Klemmvorrichtung wirkenden Klemmkräfte in dem U-förmigen Bügel aufgenommen sind.

In konstruktiv einfacher Weise ist der Verschwenkbolzen radial in Schlitze der Schenkelenden eingelegt und wird durch die Klemmfeder in seiner Einbaulage im U-förmigen Bügel gehalten. Hierzu wird zweckmäßig die Klemmfeder als eine auf der Verschwenkachse liegende Schenkelfeder oder Spiralfeder ausgebildet, deren erster Schenkel am Klemmkörper angreift und diesen federbelastet und deren zweiter Schenkel in einer am Schenkelende ausgebildeten Rastvertiefung des Bügels gehalten ist. Diese Rastvertiefung ist zweckmäßig in der Stirnseite des freien Schenkelendes ausgebildet. Zur Fixierung des Verschwenkbolzens muss ein Federende der Klemmfeder lediglich auf die freie Stirnseite des Schenkelendes gehoben werden. Beim Einschieben des Verschwenkbolzens in die Schlitze des U-förmigen Bügels wird das auf der Stirnseite liegende Schenkelende verschoben, bis es in die Rastvertiefung der Stirnseite einrückt. Dadurch ist der Verschwenkbolzen über das verrastete Schenkelende der Klemmfeder unverlierbar im Bügel gehalten.

Um die unter Federkraft mögliche Drehbewegung des Klemmkörpers zu begrenzen, ist am Bügel ein Anschlag ausgebildet, der zweckmäßig als am Schenkel angeformte Biegelasche vorgesehen ist. Die Klemmfeder belastet den Klemmkörper in Drehrichtung auf den Anschlag; ohne einen eingeschobenen Schneidfaden liegt der Klemmkörper unter Wirkung der Klemmfeder am Anschlag an. Die Klemmfeder ist vorteilhaft eine Schenkelfeder oder Spiralfeder, die zusammen mit dem Klemmkörper auf dem Verschwenkbolzen gehalten und gelagert ist.

In einem ersten Ausführungsbeispiel der Erfindung ist die Klemmfeder zwischen den Schenkeln des Bügels angeordnet. Damit liegt sie geschützt zwischen den Schenkeln. Eine einfache Anordnung ist gegeben, wenn der Klemmkörper außermittig zwischen den Schenkeln liegt, so dass zweckmäßig auf einer Seite des Klemmkörpers ausreichend Bauraum für eine Klemmfeder zur Verfügung steht. In dem Volumen des zwischen dem Klemmkörper und einem Schenkel des Bügels gebildeten Freiraums wird vorteilhaft ein Füllkörper eingesetzt, um einem Ausweichen des Schneidfadens in diesen Freiraum entgegenzuwirken. Ein versehentliches Einschieben des Schneidfadens in den Freiraum des U-formigen Bügels kann damit verhindert werden.

In einer einfachen Ausführungsform ragt ein am Grundkörper des Fadenmähkopfes vorgesehenes Wandelement des Grundkörpers in den U-förmigen Bügel der Klemmvorrichtung , ein, wodurch eben dieser Freiraum zwischen dem Klemmkörper und dem Schenkel zumindest teilweise abgedeckt ist. Dadurch ist ein Ausweichen des in die Klemmvorrichtung einzuschiebenden Mähfadens in den Freiraum des Bügels vermieden.

In besonderer Ausbildung kann in den Freiraum zwischen dem Klemmkörper und einem Schenkel des Bügels auch ein insbesondere raumfüllendes Einlegeteil eingelegt werden, wobei das Einlegeteil den Anforderungen entsprechend gestaltet ist und das Volumen des Freiraums ganz oder teilweise füllt. Das Einlegeteil ist ein vorzugsweise dreidimensional gestaltetes Blechformteil, welches vorzugsweise vom Verschwenkbolzen durchragt ist und insbesondere mit einer Drehsicherung am Bügel festgelegt sein kann. Die Drehsicherung ist zweckmäßig als vom Einlegeteil abgebogener Sicherungsflansch ausgebildet, der vorzugsweise in den Schlitz des Schenkels des Bügels eingreift, der den Verschwenkbolzen aufnimmt.

Das Einlegeteil ist derart gestaltet, dass es innerhalb des Freiraums mit einem ersten Abschnitt etwa flächig am Schenkel des Bügels anliegt und mit einem zweiten Abschnitt eng benachbart zum Klemmkörper liegt. Der zweite, zweckmäßig flächig ausgeführte Abschnitt hat so viel seitlichen Abstand vom Klemmkörper, dass dieser ohne Behinderung durch das Einlegeteil um seine Verschwenkachse frei drehen kann.

Um einen Freiraum innerhalb des Bügels zu minimieren oder ganz zu vermeiden, ist in einer weiteren Ausführungsform der Erfindung vorgesehen, dass der Verschwenkbolzen mit einem Endabschnitt über einen Schenkel des Bügels hinausragt, wobei die Klemmfeder auf dem Endabschnitt des Verschwenkbolzens außerhalb des Bügels angeordnet ist. Die Schenkel des Bügels haben auf beiden Seiten des Klemmkörpers so viel seitlichen Abstand vom Klemmkörper, dass dieser ohne Behinderung um seine Verschwenkachse frei drehen kann.

Ein leichtes Einschieben des Schneidfadens in die Klemmvorrichtung ist gewährleistet, wenn die Klemmfläche des Bügels in einer Höhe mit der Unterkante der Fadenöffnung liegt; die Fadenöffnung ist zweckmäßig durch eine in der Umfangswand des Grundkörpers gehaltene Austrittshülse gebildet. Um die Austrittshülse gegen die wirkenden Fliehkräfte zu sichern, ist vorgesehen, dass die Austrittshülse mit einem Rand in eine Aufnahme des Grundkörpers eingreift und sich so - in radialer Wirkrichtung der Fliehkraft - formschlüssig mit dem Grundkörper verzahnt.

Zweckmäßig ist der Klemmkörper in mindestens einer Seitenfläche mit einer Ansenkung versehen, um das Gesamtgewicht des Klemmkörpers zu reduzieren und dessen Schwerpunkt möglichst nahe an die Verschwenkachse zu rücken. Die Ansenkung wird dabei zweckmäßig als Bohrung ausgebildet, insbesondere als durchgehende Bohrung, deren Bohrungsachse vorzugsweise etwa parallel zum Verschwenkbolzen liegt.

Der U-förmige Bügel der Klemmvorrichtung nimmt alle Klemmkräfte und Federkräfte auf, so dass der Grundkörper um die Klemmvorrichtung herum mechanisch weitgehend unbelastet ist. Zweckmäßig besteht der Bügel aus Metall und wird insbesondere aus einem Metallstreifen gebogen.

Weitere Merkmale der Erfindung ergeben sich aus den weiteren Ansprüchen, der Beschreibung und der Zeichnung, in der nachfolgend im Einzelnen beschriebene Ausführungsbeispiele der Erfindung dargestellt sind. Es zeigen:
- Fig. 1: eine perspektivische Ansicht auf den Grundkörper eines Fadenmähkopfes,
- Fig. 2: eine Ansicht auf den Grundkörper des Fadenmähkopfes nach Fig. 1 bei abgenommenem Oberteil,
- Fig. 3: einen Schnitt durch den Grundkörper längs der Linie III-III in Fig. 2,
- Fig. 4: einen Schnitt durch den Grundkörper längs der Linie IV-IV in Fig. 3,
- Fig. 5: eine perspektivische Ansicht einer in den Grundkörper einzusetzenden Klemmvorrichtung,
- Fig. 6: eine Ansicht auf die Klemmvorrichtung von hinten,
- Fig. 7: einen Schnitt durch die Klemmvorrichtung längs der Linie VII-VII in Fig. 6,
- Fig. 8: eine Seitenansicht auf die Klemmvorrichtung nach Fig. 5,
- Fig. 9: einen Schnitt längs der Linie IX-IX in Fig. 8,
- Fig. 10: ein weiteres Ausführungsbeispiel eines Fadenmähkopfes in einer Darstellung entsprechend Fig. 2,
- Fig. 11: einen Schnitt durch den Fadenmähkopf längs der Linie XI-XI in Fig. 10,
- Fig. 12: einen Schnitt durch den Grundkörper des Fadenmähkopfes längs der Linie XII-XII in Fig. 11,
- Fig. 13: eine perspektivische Ansicht eines weiteren Ausführungsbeispiels einer Klemmvorrichtung,
- Fig. 14: eine Ansicht auf die Klemmvorrichtung nach Fig. 13 von hinten,
- Fig. 15: einen Schnitt durch die Klemmvorrichtung nach Fig. 13 längs der Linie XV-XV in Fig. 14,
- Fig. 16: eine Seitenansicht auf die Klemmvorrichtung nach Fig. 13,
- Fig. 17: einen Schnitt längs der Linie XVII-XVII in Fig. 16,
- Fig. 18: eine perspektivische Ansicht auf eine in den Grundkörper des Fadenmähkopfes nach den Fig. 2 bis 4 einzusetzende Austrittshülse,
- Fig. 19: in schematischer Darstellung die Lage der Austrittshülse nach Fig. 18 in Bezug zu einer Klemmvorrichtung,
- Fig. 20: einen Schnitt durch die Anordnung nach Fig. 19,
- Fig. 21: einen weiteren Schnitt durch die Anordnung nach Fig. 19,
- Fig. 22: ein drittes Ausführungsbeispiel des Grundkörpers eines Fadenmähkopfes in einer Ansicht gemäß Fig. 2,
- Fig. 23: einen Schnitt längs der Linie XXIII-XXIII in Fig. 22,
- Fig. 24: eine perspektivische Ansicht einer im Grundkörper nach den Figuren 22 und 23 eingesetzten Austrittshülse,
- Fig. 25: eine Draufsicht auf die Austrittshülse nach Fig. 22,
- Fig. 26: einen Schnitt durch die Austrittshülse längs der Linie XXVI-XXVI in Fig. 25,
- Fig. 27: eine perspektivische Ansicht eines dritten Ausführungsbeispiels einer erfindungsgemäßen Klemmvorrichtung,
- Fig. 28: eine Ansicht auf die Klemmvorrichtung nach Fig. 27 von hinten,
- Fig. 29: einen Schnitt durch die Klemmvorrichtung nach Fig. 27 längs der Linie XXIX-XXIX in Fig. 28,
- Fig. 30: eine Seitenansicht auf die Klemmvorrichtung nach Fig. 27,
- Fig. 31: einen Schnitt durch die Klemmvorrichtung längs der Linie XXXI-XXXI in Fig. 30,
- Fig. 32: eine perspektivische Ansicht eines vierten Ausführungsbeispiels einer erfindungsgemäßen Klemmvorrichtung mit einem Füllelement,
- Fig. 33: eine weitere perspektivische Ansicht der Klemmvorrichtung nach Fig. 32,
- Fig. 34: eine Ansicht auf die Klemmvorrichtung nach Fig. 32 von hinten,
- Fig. 35: einen Schnitt durch die Klemmvorrichtung längs der Linie XXXV-XXXV in Fig. 34,
- Fig. 36: eine Seitenansicht auf die Klemmvorrichtung nach Fig. 32,
- Fig. 37: einen Schnitt durch die Klemmvorrichtung längs der Linie XXXVII-XXXVII in Fig. 36,
- Fig. 38: eine perspektivische Ansicht auf das Füllelement der Klemmvorrichtung nach Fig. 32,
- Fig. 39: eine Ansicht auf das Füllelement von vorne,
- Fig. 40: eine Seitenansicht des Füllelementes.

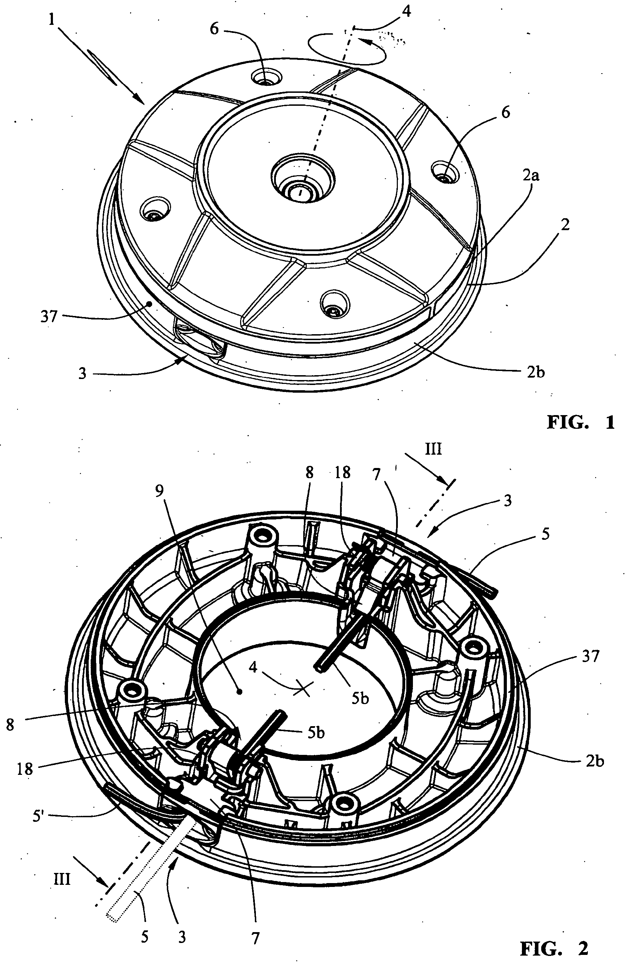

In den dargestellten Ausführungsbeispielen sind Fadenmähköpfe 1 für Freischneider dargestellt, die mit Schneidfäden 5 (Fig. 2) bestückt werden. Wie Fig. 1 zeigt, besteht ein Fadenmähkopf aus einem im Wesentlichen rotationssymmetrischen Grundkörper 2, in dessen Umfangswand 37 zumindest zwei Fadenöffnungen 3 vorgesehen sind, die sich bezogen auf die Drehachse 4 des Fadenmähkopfes 1 zweckmäßig diametral gegenüberliegen.

Der Grundkörper 2 besteht aus einem Oberteil 2a und einem Unterteil 2b, die über Befestigungsschrauben 6 miteinander verbunden sind und den Grundkörper 2 bilden. Wird das Oberteil 2a gelöst, ergibt sich eine Ansicht auf das Unterteil 2b, wie es in Fig. 2 dargestellt ist. Im Ausführungsbeispiel nach den Fig. 2 bis 4 weist das Unterteil 2b zwei Fadenöffnungen 3 auf, die bezogen auf die Drehachse 4 einander diametral gegenüberliegen. Auch andere Anordnungen können zweckmäßig sein, wie z. B. drei Fadenöffnungen, die in Drehrichtung zueinander um 120° versetzt liegen. Auch können vier oder sechs Fadenöffnungen mit dahinter angeordneten Klemmvorrichtungen 8 vorgesehen sein. Jede Fadenöffnung 3 ist vorteilhaft durch eine Austrittshülse 7 gebildet, welche in dem Grundkörper 2, d. h. im Unterteil 2b, fest gehalten ist. Eine Austrittshülse 7 liegt zweckmäßig unmittelbar vor einer Klemmvorrichtung 8 für den Schneidfaden 5, der bei rotierendem Fadenmähkopf etwa radial gestreckt liegt. Schlägt der Schneidfaden gegen ein Hindernis, ergibt sich eine abgeknickte Lage, wie der Schneidfaden 5' zeigt.

Das Unterteil 2b des Grundkörpers hat eine ringförmige Gestalt mit einem freien Zentrum 9. Der Schneidfaden 5 wird radial von außen durch die Austrittshülse 7 in die Klemmvorrichtung 8 so weit eingeschoben, bis ein inneres Ende 5b des Schneidfadens 5 in das freie Zentrum 9 einragt. Verschleißt das über die Umfangswand 37 überstehende wirksame Ende des Schneidfadens oder bricht dieser in der Fadenöffnung 3 ab, so kann der Schneidfaden 5 durch Ziehen an seinem inneren Ende 5b aus der Klemmvorrichtung 8 entfernt werden.

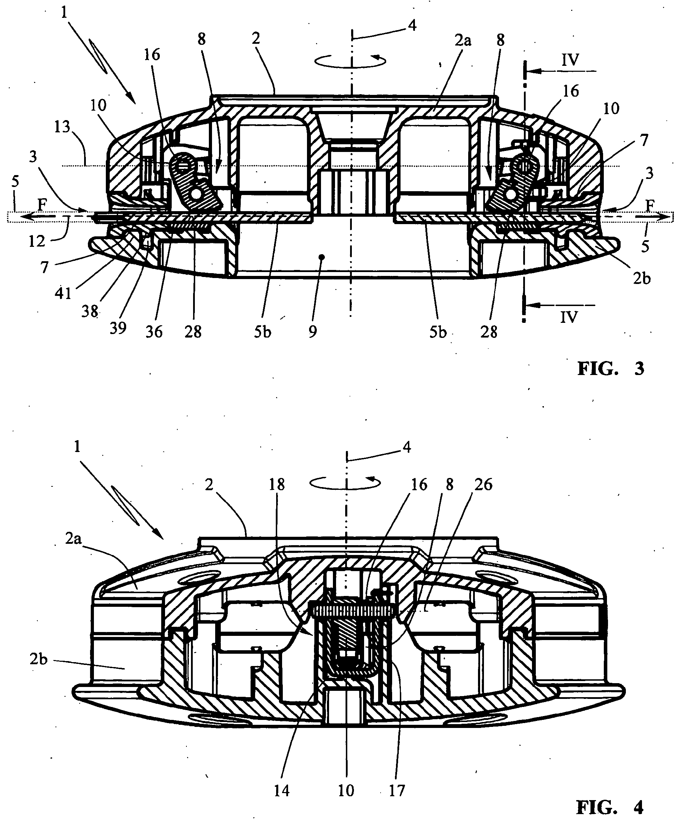

Wie Fig. 3 zeigt, weist die Klemmvorrichtung 8 einen Klemmkörper 10 auf, der um einen Verschwenkbolzen 16 verschwenkbar ist. Die Verschwenkachse 26 des Verschwenkbolzens 16 liegt in einer Ebene 13, die etwa parallel zu einer Schnittebene 12 der Schneidfäden 5 liegt, die sich bei Rotation des Grundkörpers 2 des Fadenmähkopfes 1 um die Drehachse 4 ergibt. Mittels des Klemmkörpers 10 wird der Schneidfaden 5 im Grundkörper 2 geklemmt gehalten, wobei die auf die Schneidfäden 5 in Längsrichtung wirkenden radialen Fliehkräfte F den am Schneidfaden angreifenden Klemmkörper 10 in die Klemmstellung drängen, die Klemmung des Schneidfadens 5 im Betrieb des Fadenmähkopfes 1 also selbstverstärkend ist.

Gemäß der Erfindung bildet die Klemmvorrichtung 8 eine selbstständige, modulare Baueinheit 18, die in einfacher Weise mit wenigen Handgriffen vormontiert werden kann. Die vormontierte Baueinheit wird in eine Aufnahme 14 des Grundkörpers 2 eingesetzt, im Ausführungsbeispiel in die Aufnahme 14 im Unterteil 2b eingeschoben, wodurch die Klemmvorrichtung 8 sicher und - nach Aufsetzen des Oberteils 2a - auch unverlierbar in der Aufnahme 14 gehalten ist.

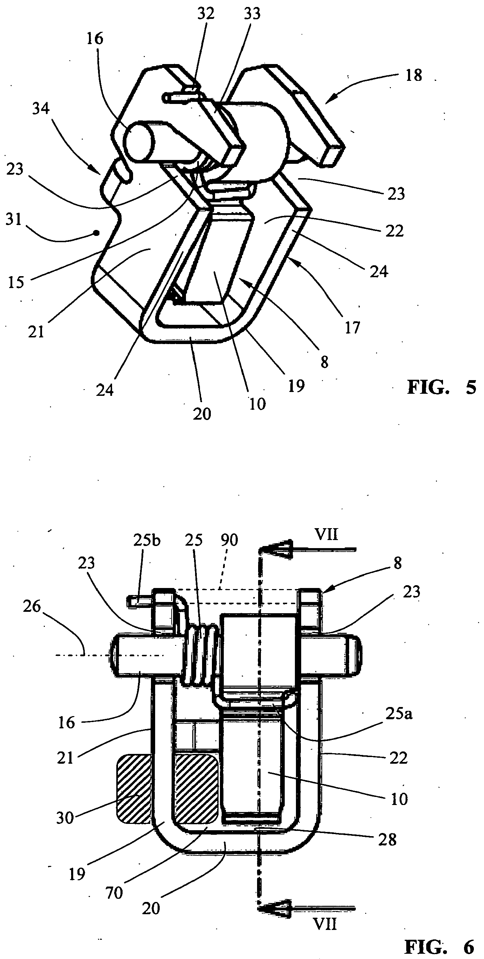

Die im Ausführungsbeispiel nach den Figuren 2 bis 4 verwendete Klemmvorrichtung 8 ist in den Figuren 5 bis 9 vergrößert wiedergegeben.

Die Klemmvorrichtung 8 besteht in einer ersten Ausführungsform im Wesentlichen aus dem Klemmkörper 10, einer Klemmfeder 25 und dem als Lagerung dienenden Verschwenkbolzen 16, die gemeinsam an einem Bauteil 17 gehalten sind.

Das Bauteil 17 ist im gezeigten Ausführungsbeispiel ein U-förmiger Bügel 19, der - vgl. Fig. 6 - im Wesentlichen zu einer Mittelebene symmetrisch ausgebildet ist. Der Bügel 19 besteht aus zwei Schenkeln 21 und 22, die zueinander parallel liegen und an einem Ende durch einen Steg 20 miteinander verbunden sind. Es kann vorteilhaft sein, den U-förmigen Bügel auch im Bereich seines offenen Endes durch einen Steg 90 (strichlierte Darstellung) zu versteifen, der die freien Enden der Schenkel 21, 22 miteinander verbindet. Mit Uförmiger Bügel ist ein Grundbauteil bezeichnet, das für die Gestaltung der Erfindung von Bedeutung ist; dieses Grundbauteil kann ergänzt werden, z.B. durch einen Steg 90 geschlossen werden oder auch aus einem geschlossenen Profil gebildet sein, das das Grundbauteil enthält.

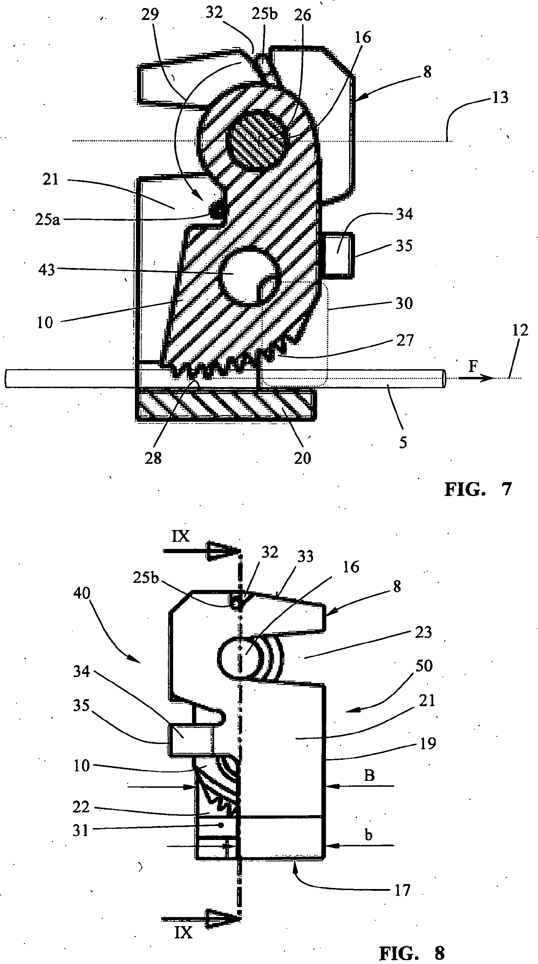

Im Ausführungsbeispiel liegen die Schenkel 21 und 22 zur Ebene des Steges 20 senkrecht. Im Bereich der freien Enden der Schenkel 21 und 22 sind auf gleicher Höhe Schlitze 23 vorgesehen, die zu einem Längsrand 24 der Schenkel 21 und 22 offen sind. Die Längsränder 24 liegen auf der Rückseite 50 (Fig. 8) der Klemmvorrichtung 8.

Der Verschwenkbolzen 16 liegt mit seinen Endabschnitten in den Schlitzen 23, so dass der Verschwenkbolzen 16 in den Schenkelenden gelagert ist. Der Verschwenkbolzen 16 trägt den Klemmkörper 10, wobei der Klemmkörper 10 drehbar auf dem Verschwenkbolzen 16 gehalten sein kann. Zweckmäßig kann auch eine einteilige Ausbildung von Klemmkörper 10 und Verschwenkbolzen 16 vorgesehen sein.

Auf einer Seitenfläche des Klemmkörpers 10 liegt zwischen diesem und einem Schenkel 21 des Bügels 19 eine Klemmfeder 25, die im gezeigten Ausführungsbeispiel als Schenkelfeder oder Spiralfeder gestaltet ist. Ein erster Schenkel 25a der Spiralfeder hintergreift den Klemmkörper 10; der zweite Schenkel 25b der Spiralfeder liegt in einer Rastvertiefung 32 des Schenkels 21, wobei die Rastvertiefung 32 in der Stirnseite 33 des freien Schenkelendes des Schenkels 21 ausgebildet ist.

Wie Fig. 7 zeigt, ist der Klemmkörper 10 als einarmiger Hebel gestaltet, der an einem Ende auf dem Verschwenkbolzen 16 gelagert ist und dessen anderes Ende klemmend am Schneidfaden 5 angreift. Das klemmende Ende des Hebels ist vorzugsweise elliptisch gerundet und mit einer Zahnung 27 versehen, die sich in den Schneidfaden 5 gräbt und diesen zwischen einer Klemmfläche 28 am Bügel 19 und dem Klemmkörper 10 geklemmt hält. Die Klemmfläche 28 ist im gezeigten Ausführungsbeispiel an dem die Schenkel 21 und 22 verbindenden Steg 20 des U-förmigen Bügels 19 ausgebildet.

Die Klemmfeder 25 ist derart angeordnet, dass sie das Klemmelement 10 in die in Fig. 7 gezeigte Klemmstellung belastet. Die Federkraft wirkt somit in Drehrichtung 29. Um den Verschwenkweg des Klemmkörpers 10 in Drehrichtung 29 zu begrenzen, ist am Bügel 19 ein Anschlag 34 ausgebildet. Der Anschlag 34 wird zweckmäßig von einer Biegelasche 35 gebildet, die einteilig an dem Bügel 19 angeformt ist und in den Schwenkweg des Klemmkörpers 10 abgebogen wird.

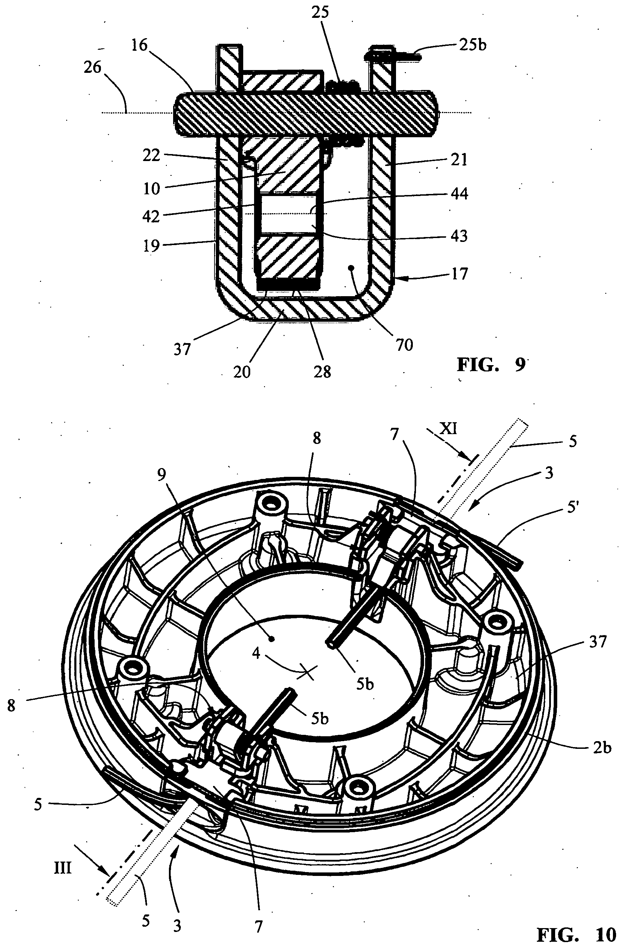

Wie die Figuren 6 und 9 zeigen, liegt der Klemmkörper 10 außermittig zwischen den Schenkeln 21 und 22 des U-förmigen Bügels 19. Diese Lage ist bedingt durch die auf dem Verschwenkbolzen 16 montierte Klemmfeder 25. Um zu gewährleisten, dass beim Einschieben eines Schneidfadens 5 dieser sicher zwischen dem Klemmelement 10 und der Klemmfläche 28 zu liegen kommt, ist am Grundkörper 2 des Mähkopfes ein Wandelement 30 vorgesehen, welches den durch die Spiralfeder 25 bedingten Freiraum 70 zwischen dem Klemmelement 10 und dem Schenkel 21 abdeckt. Das Wandelement 30 ragt, wie insbesondere Fig. 6 zeigt, in die Kontur des Bügels 19 ein. Um eine zweckmäßige Lage für das Wandelement 30 zu erhalten, ist am Bügel 19 eine Ausklinkung 31 für das Wandelement 30 vorgesehen. Zweckmäßig wird hierzu die Breite b des einen Schenkels 21 über einen Teil seiner Länge geringer ausgebildet als die Breite B des anderen Schenkels 22. Die so im Bereich des Schenkels 21 geschaffene Ausklinkung 31 wird durch das einragende Wandelement 30 (Fig. 6) verschlossen, wobei das Wandelement 30 bis an die Seitenfläche des Klemmelementes 10 heranragt.

Der radial in die Schlitze 23 der Schenkelenden eingelegte Verschwenkbolzen 16 wird durch die Klemmfeder 25 in seiner Einbaulage im Bügel 19 gesichert. Damit das Klemmelement 10 eine definierte Ausgangslage einnimmt, ist auf der Vorderseite 40 der Klemmvorrichtung 8 der Anschlag 34 zur Begrenzung der Drehbewegung des Klemmkörpers 10 in Drehrichtung 29 vorgesehen. Der Anschlag ist als vom Schenkel 21 abgebogene Biegelasche 35 ausgebildet, an der der Klemmkörper 10 unter Wirkung der Klemmfeder 25 anliegt.

Wie sich aus Fig. 3 ergibt, liegt die Klemmfläche 28 in einer Höhe mit der Unterkante 36 der Fadenöffnung 3. Zweckmäßig wird die Fadenöffnung 3 durch eine in der Umfangswand 37 (Fig. 2) des Grundkörpers 2 gehaltene Austrittshülse 7 gebildet.

Die Austrittshülse 7 weist einen Rand 38 auf, mit dem sie in eine Aufnahme 39 des Grundkörpers 2 eingreift. Zweckmäßig übergreift die Austrittshülse 7 einen Umfangsrand 41 des Grundkörpers 2 bzw. des Unterteils 2b des Grundkörpers 2 (Fig. 3).

Wie die Figuren 7 und 9 zeigen, weist der Klemmkörper 10 in mindestens einer Seitenfläche eine Ansenkung 42 auf, wodurch das Gewicht des Klemmkörpers 10 reduziert und der Schwerpunkt des Klemmkörpers nahe der Verschwenkachse 26 zu liegen kommt. Dadurch kann der Einfluss der auftretenden Fliehkräfte auf den Klemmkörper 10 reduziert werden, d. h., die aufgrund der Fliehkraft von dem klinkenartigen Klemmkörper 10 auf den Schneidfaden zusätzlich wirkenden Klemmkräfte werden verringert, so dass die maximale Klemmbelastung des Schneidfadens reduziert und weitgehend allein durch die Klemmfeder 25 bestimmt ist. Zweckmäßig ist die Ansenkung 42 als Bohrung 43, insbesondere als durchgehende Bohrung 43 ausgebildet, deren Bohrungsachse 44 etwa parallel zur Verschwenkachse 26 des Verschwenkbolzens 16 liegt.

Der U-förmige Bügel 19 besteht insbesondere aus Metall und wird insbesondere aus einem Metallstreifen gebogen. Dabei können die freien Enden der Schenkel 21 und 22 aufeinander zu abgebogen sein und einander überlappen, so dass ein die Öffnung des U verschließender Steg 90 (strichlierte Darstellung) gebildet ist, der die Steifigkeit des Bauteils erhöht.

Der Fadenmähkopf im Ausführungsbeispiel nach den Figuren 10 bis 12 entspricht im Grundaufbau dem nach den Figuren 2 bis 4, weshalb für gleiche Teile gleiche Bezugszeichen verwendet sind.

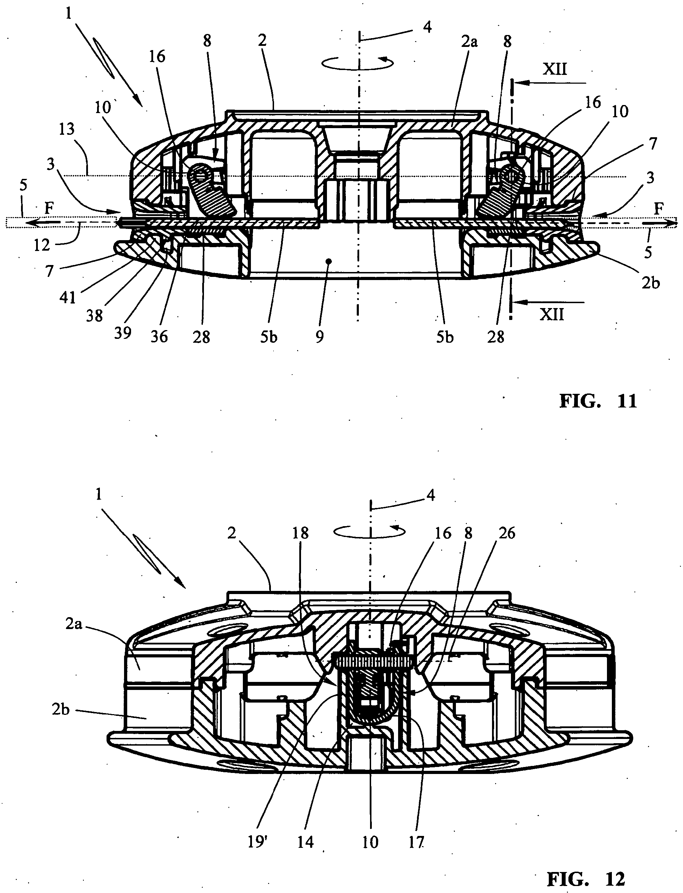

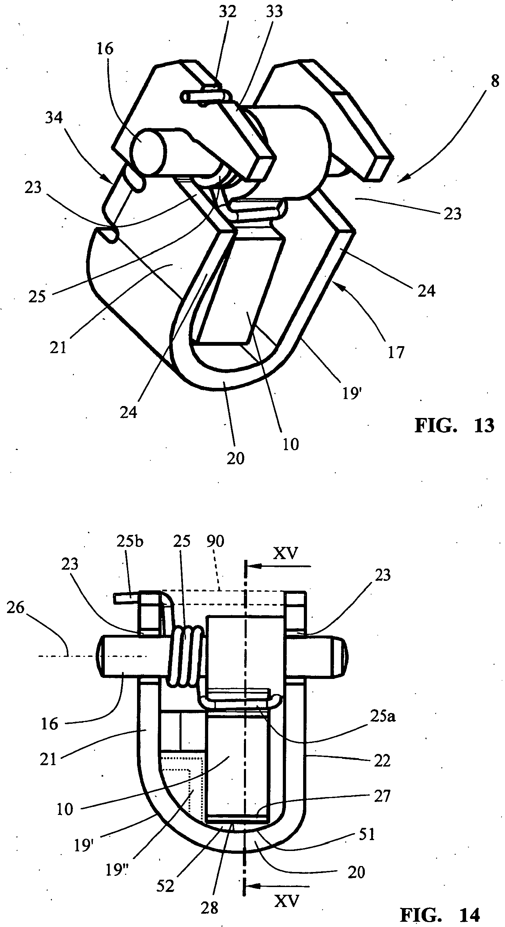

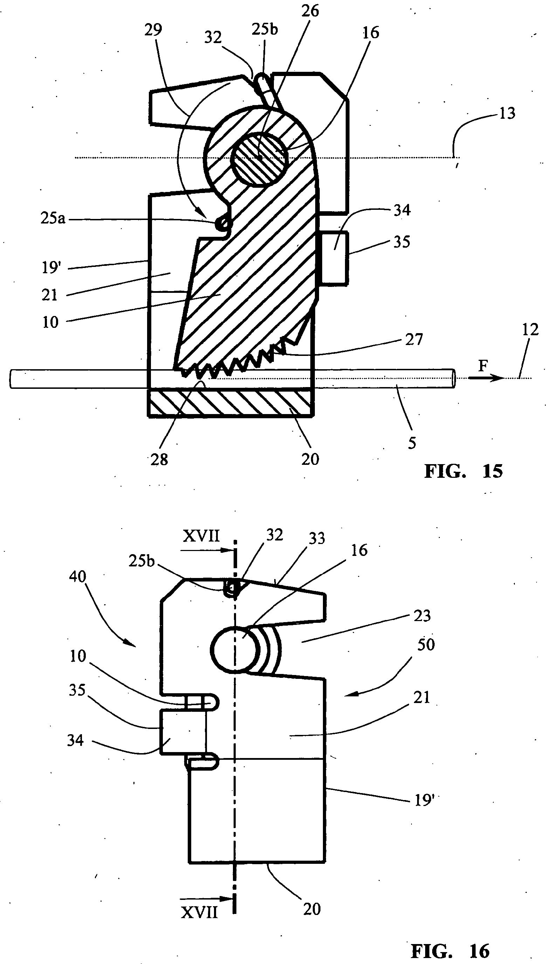

Wie aus der Darstellung nach Fig. 12 zu ersehen, ist der U-förmige Bügel 19' der Klemmvorrichtung 8 zu seiner Mittelebene asymmetrisch ausgebildet. Die Figuren 13 bis 17 zeigen die Klemmvorrichtung 8 mit einem asymmetrisch gestalteten Bügel 19, die jedoch im Grundaufbau bis auf die Form des Bügels 19 der Klemmvorrichtung 8 nach den Figuren 5 bis 9 entspricht, weshalb für gleiche Teile gleiche Bezugszeichen verwendet sind.

Der U-förmige Bügel 19' besteht wiederum aus zwei zueinander parallel verlaufenden Schenkeln 21 und 22, wobei jedoch der Schenkel 21 kürzer als der Schenkel 22 ausgebildet ist. Der die Schenkel 21 und 22 miteinander verbindende Steg 20 ist gerundet ausgeführt, derart, dass unterhalb des Klemmelementes 10 ein im Wesentlichen symmetrischer Bogenabschnitt 51 liegt. Es kann vorteilhaft sein, auch die freien Enden der Schenkel 21, 22 durch einen versteifenden Steg miteinander zu verbinden. Zwischen dem Bogenabschnitt 51 und dem Klemmkörper 10 ergibt sich so ein Klemmraum 52, in den der Schneidfaden 5 zur Klemmung einzuführen ist. Bei einem radialen Einschieben des Schneidfadens 5 in die Fadenöffnung 3 wird der Schneidfaden 5 bedingt durch den gerundeten Steg 20 zwangsweise im Bereich des Bogenabschnitts 51 zu liegen kommen und damit sicher unterhalb des Klemmkörpers 10 positioniert. Durch den gerundeten Steg 20 mit dem teilkreisförmigen Bogenabschnitt 51 ist gewährleistet, dass der Faden nicht in den durch die Klemmfeder 25 bedingten Freiraum zwischen dem Schenkel 21 und dem Klemmkörper 10 ausweichen kann. Der gerundete Steg 20 verbindet den kürzeren Schenkel 21 mit dem längeren Schenkel 22, wobei die freien Enden der Schenkel 21 und 22 etwa auf gleicher Höhe liegen. Der gerundete Steg 20 verengt den zwischen dem Klemmkörper 10 und dem Schenkel 21 liegenden Freiraum, so dass eine Fehllage eines zu klemmenden Schneidfadens 5 verhindert ist. Es ist eine Art Rinne im Steg 20 ausgebildet.

Es kann zweckmäßig sein, den U-förmigen Bügel 19' derart auszubilden, dass der Freiraum durch eine Stufe 19" gefüllt wird, die vorzugsweise einteilig mit dem Bügel 19' ausgebildet ist. Der Bügel 19' kann insbesondere unter Ausbildung der Stufe 19" geformt werden.

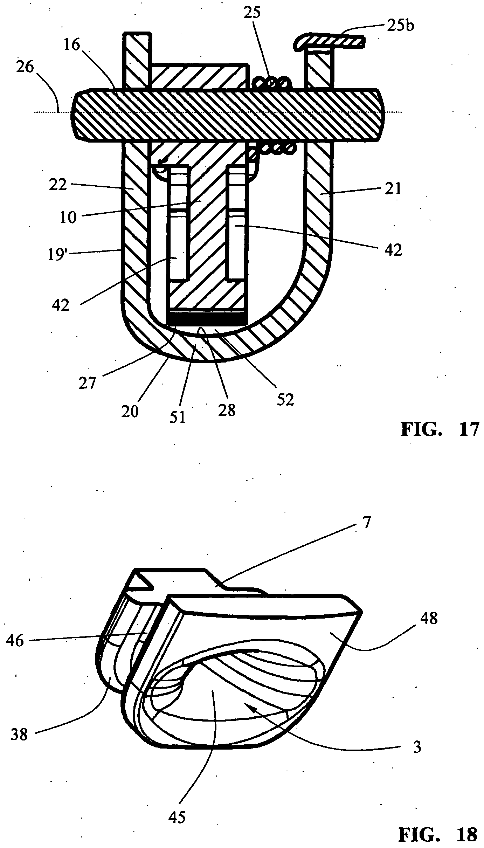

In Fig. 18 ist eine Austrittshülse 7 dargestellt, wie sie im Ausführungsbeispiel nach den Figuren 2 bis 4 verwendet ist. Die Austrittshülse 7 weist eine trichterförmige Austrittsöffnung 45 auf, welche im Betrieb eine Abstützung des Schneidfadens 5 im Bereich der Fadenöffnung 3 ermöglicht. Die Austrittshülse 7 weist einen Rand 38 auf, der zusammen mit einer Stirnwand 48 eine Aufnahmenut 46 begrenzt, in die ein Umfangsrand 41 (Fig. 3) des Grundkörpers 2 des Fadenmähkopfes 1 eingreift.

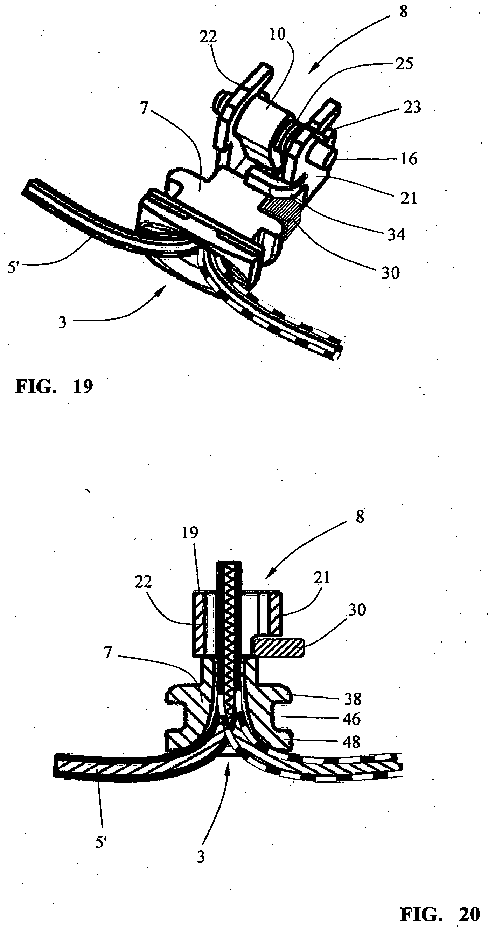

Wie die Fig. 19 und 20 zeigen, ist die Ausrichtung der Austrittshülse 7 zur Klemmvorrichtung 8 derart vorgesehen, dass der eine Schenkel 22 des U-förmigen Bügels 19 etwa in Flucht mit der Seitenwand der Austrittshülse 7 liegt (Fig. 20). Wie Fig. 19 zeigt, ist die Austrittshülse 7 in ihrer Lage im Grundkörper 2 durch den Anschlag 34 des Bügels 19 ergänzend gesichert. Der unter Last zurückweichende Schneidfaden legt sich an die Wandung der Austrittshülse 7 an, wie die Darstellung des Schneidfadens 5' zeigt; bei umgekehrter Drehrichtung legt sich der Schneidfaden entsprechend der strichlierten Darstellung an die Wandung der Austrittshülse 7 an.

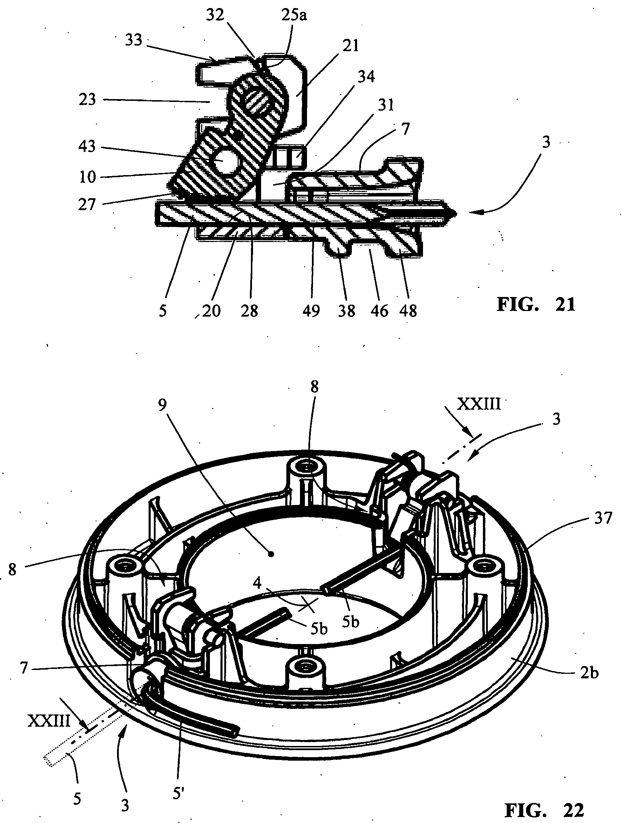

Aus dem Längsschnitt nach Fig. 21 wird deutlich, dass die Klemmfläche 28 des Steges 20 und die Innenfläche 49 der Austrittshülse 7 in etwa auf einer Ebene liegen, so dass ein durch die Fadenöffnung 3 in die Austrittshülse 7 eingeschobener Schneidfaden 5 ohne Widerstand zwischen die Klemmfläche 28 des U-förmigen Bügels 19 und den Kleminkörper 10 eingeschoben werden kann.

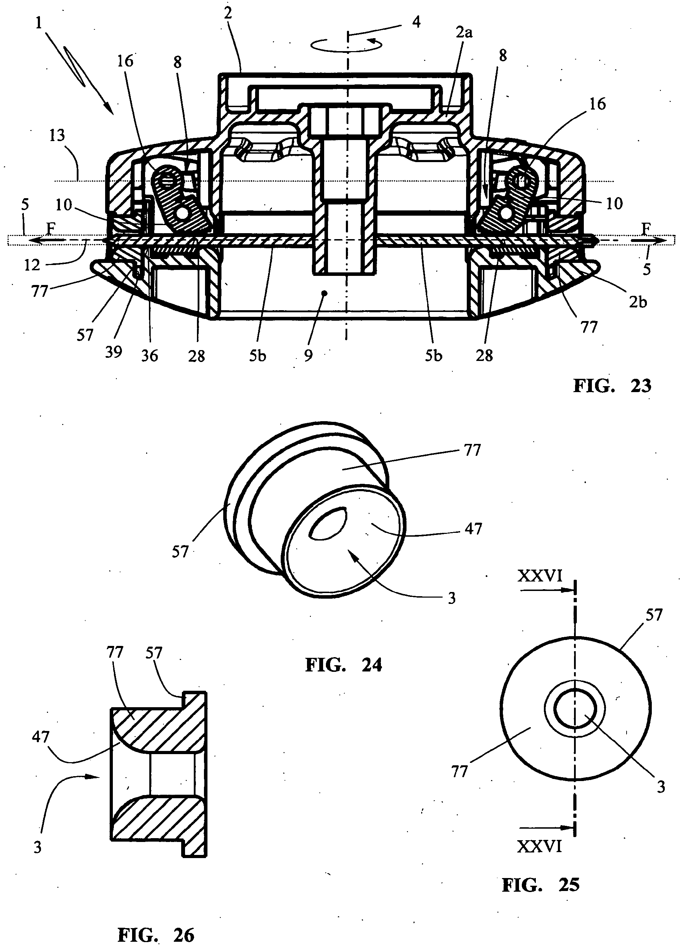

Im Ausführungsbeispiel nach den Figuren 22 und 23 ist ein Grundkörper eines Fadenmähkopfes in einer weiteren Ausführung gezeigt, wobei für gleiche Teile gleiche Bezugszeichen wie zu den Fig. 2 bis 4 verwendet sind. Bei diesem weiteren Ausführungsbeispiel wirkt die erfindungsgemäße Klemmvorrichtung 8 mit einer einfachen Austrittshülse 77 zusammen. Die Austrittshülse 77 ist im Wesentlichen zylindrisch gestaltet und weist an einem Ende der Fadenöffnung 3 einen Austrittskegel 47 auf, der einen Schneidfaden im Betrieb abstützt. An dem dem Austrittskegel 47 gegenüberliegenden Ende der zylindrischen Austrittshülse 77 ist ein Ringflansch 57 ausgebildet. Der Ringflansch 57 greift - wie Fig. 23 zeigt - in eine Aufnahme 39 im Grundkörper 2 ein, so dass die Austrittshülse 77 gegen die Wirkung der Fliehkraft F gesichert ist. Die im Fadenmähkopf 1 nach den Figuren 22 und 23 verwendete Klemmvorrichtung 8 kann entsprechend den Figuren 5 bis 9 oder entsprechend den Figuren 13 bis 17 ausgebildet sein.

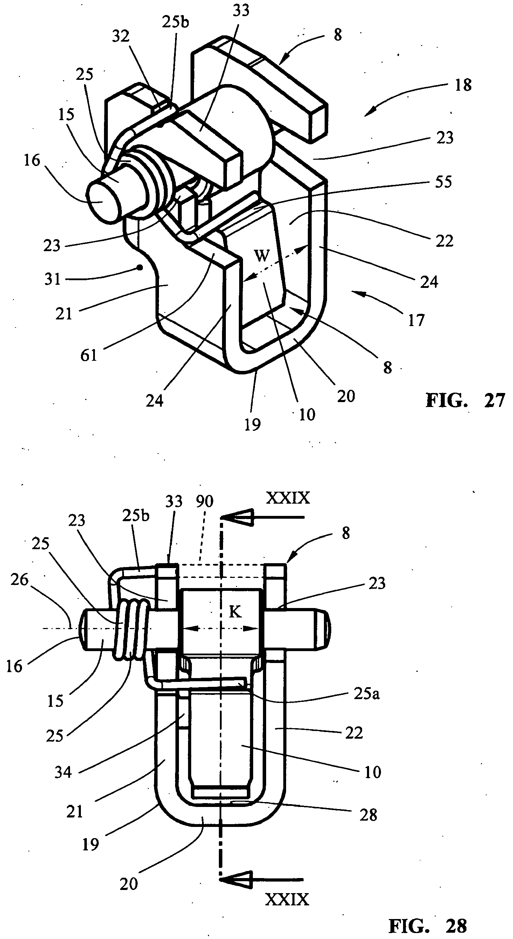

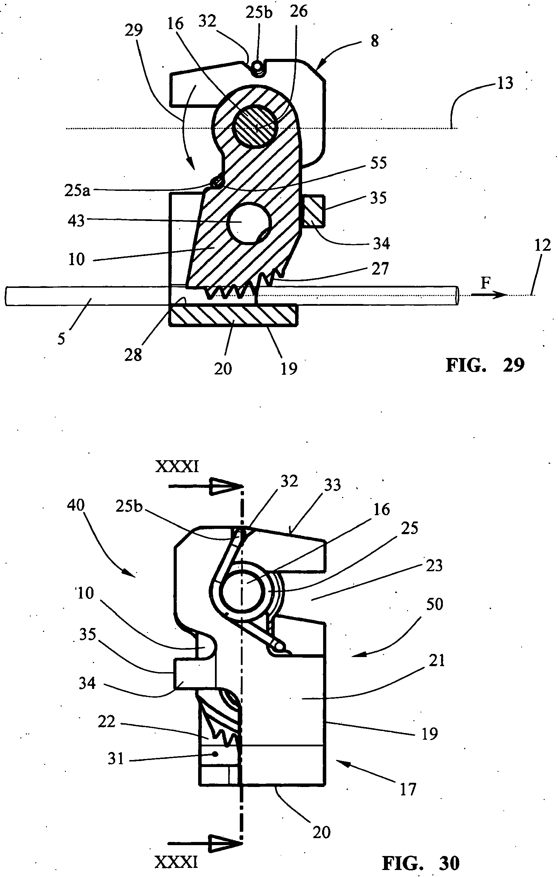

In den Figuren 27 bis 31 ist ein weiteres Ausführungsbeispiel einer Klemmvorrichtung 8 gezeigt, die im Grundaufbau der Klemmvorrichtung nach den Figuren 5 bis 9 entspricht. Gleiche Teile sind daher mit gleichen Bezugszeichen bezeichnet.

Der U-förmige Bügel 19 der Klemmvorrichtung 8 nach den Figuren 27 bis 31 hat eine Innenweite W, die der Breite K des Klemmkörpers 10 im Bereich des Verschwenkbolzens 16 entspricht (Figuren 27, 28). Der Klemmkörper 10 ist somit zwischen den Schenkeln 21 des Bügels 19 im Wesentlichen spielfrei gehalten, wobei der Verschwenkbolzen 16 an einem Ende mit einem Endabschnitt 15 über den Schenkel 21 des Bügels 19 hinausragt. Auf den Endabschnitt 15 des Verschwenkbolzens 16 ist die Klemmfeder 25 aufgeschoben (Figuren 27, 28 und 31), wobei der erste Schenkel 25a der Klemmfeder durch eine Aussparung 61 im Schenkel 21 zwischen die Schenkel 21 und 22 ragt und an einer Stufe 55 des Klemmkörpers 10 angreift. Der zweite Schenkel 25b der als Spiralfeder ausgeführten Klemmfeder 25 liegt, wie vorstehend beschrieben, in einer Rastvertiefung 32 in der Stirnseite 33 des Schenkels 21.

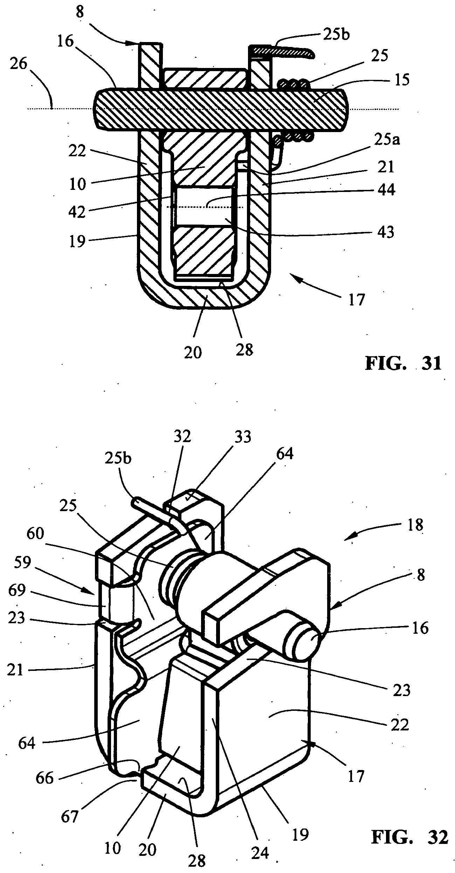

Der Unterschied der Ausführungsform nach den Figuren 27 und 31 besteht somit im Wesentlichen darin, dass der Klemmkörper 10 mittig zwischen den Schenkeln 21 und 22 des Bügels 19 liegt und die Klemmfeder 25 außerhalb des Bügels 19 auf einem aus dem Schenkel 21 herausragenden Endabschnitt 15 des Verschwenkbolzens 16 gelagert ist. Dies wird insbesondere aus der Schnittdarstellung in Fig. 31 deutlich.

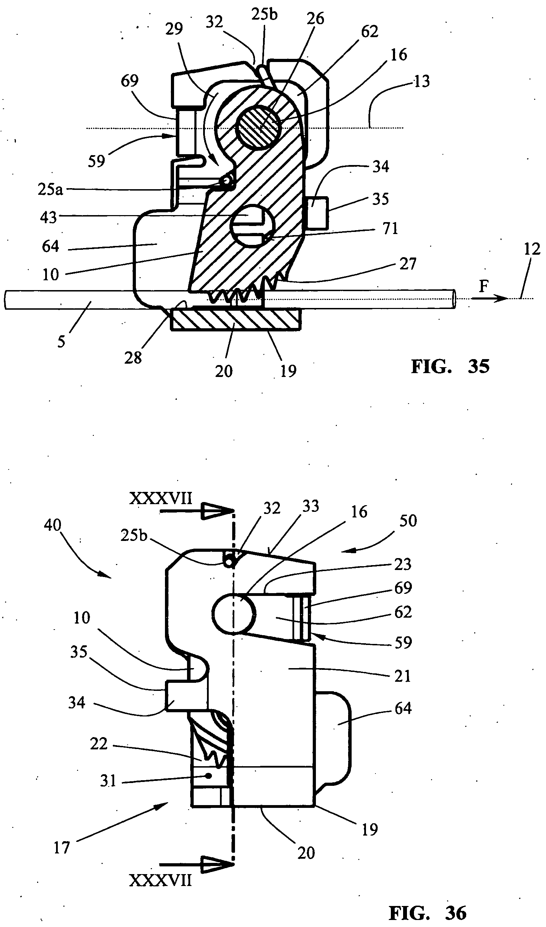

In einem nächsten Ausführungsbeispiel nach den Figuren 32 bis 37 liegt - wie im Ausführungsbeispiel nach den Figuren 5 bis 9 - der Klemmkörper 10 außermittig zwischen den Schenkeln 21 und 22 des U-förmigen Bügels 19. Gleiche Teile sind mit gleichen Bezugszeichen bezeichnet.

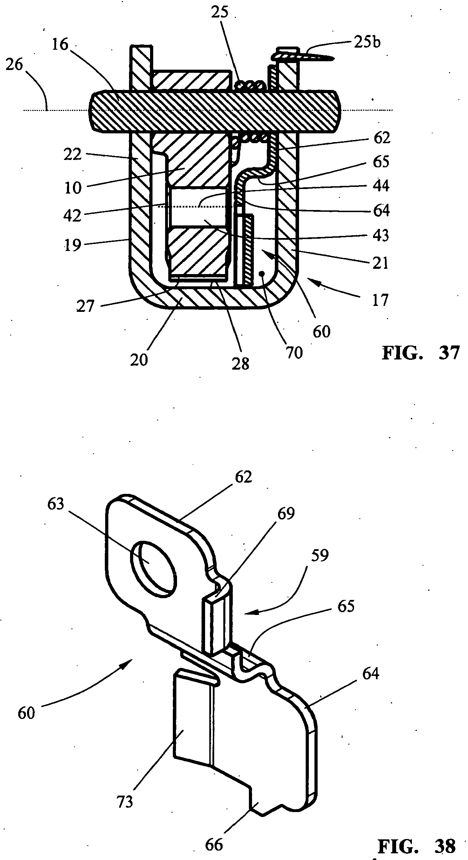

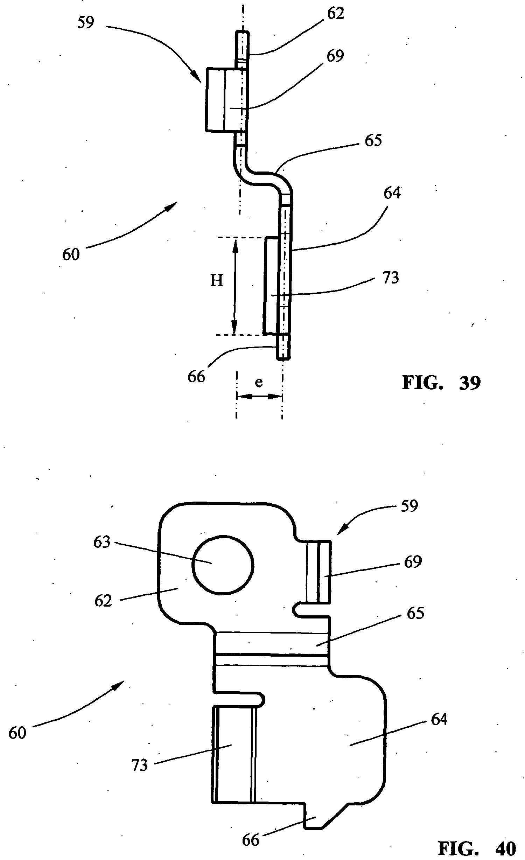

Der durch die Klemmfeder 25 bedingte Freiraum 70 zwischen dem Klemmkörper 10 und einem Schenkel 21 des Bügels 19 ist im Ausführungsbeispiel nach den Figuren 5 bis 9 durch das am Grundkörper 2 des Fadenmähkopfes 1 vorgesehene Wandelement 30 zumindest teilweise abgedeckt, damit ein in die Klemmvorrichtung 8 einzuschiebender Schneidfaden nicht in den Freiraum 70 des Bügels 19 ausweichen kann. Im Ausführungsbeispiel nach den Figuren 31 bis 35 ist der Freiraum 70 zwischen dem Klemmkörper 10 und einem Schenkel 21 des Bügels 19 durch ein Einlegeteil 60 zumindest teilweise ausgefüllt. Wie insbesondere die Figuren 32, 34 und 37 zeigen, weist das Einlegeteil 60 einen ersten Abschnitt 62 auf, der eine Öffnung 63 (Figuren 38, 40) aufweist, die vom Verschwenkbolzen 16 durchragt ist. Der erste Abschnitt 62 des Einlegeteils liegt an dem einen Schenkel 21 des Bügels 19 in etwa flächig an, wobei die Klemmfeder 25, die als Spiralfeder auf dem Verschwenkbolzen 16 gehalten ist, zwischen dem Abschnitt 62 des Einlegeteils 60 und dem Klemmelement 10 positioniert ist.

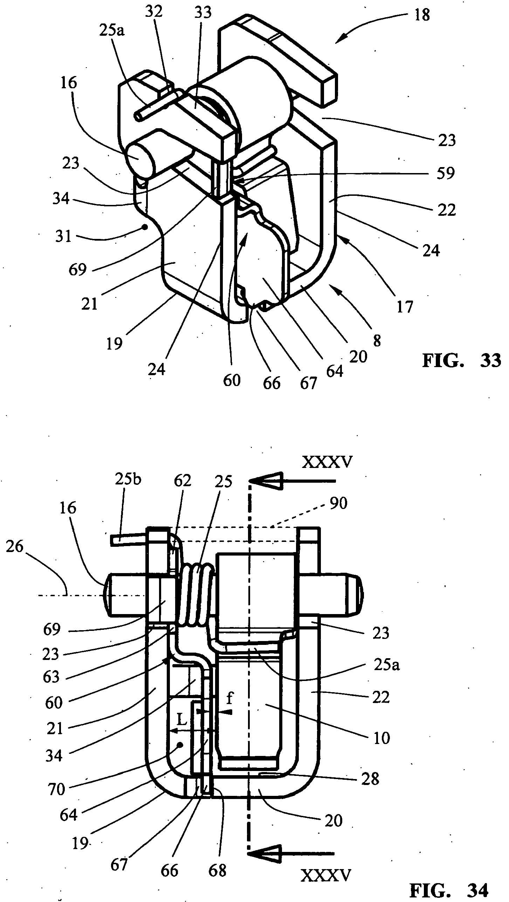

Wie insbesondere auch aus den Detaildarstellungen des Einlegeteils 60 nach den Figuren 38 bis 40 hervorgeht, ist das Einlegeteil insbesondere dreidimensional ausgebildet und besteht bevorzugt aus einem Blechformteil. An den ersten Abschnitt 62 schließt über einen Kröpfungsabschnitt 65 ein zweiter Abschnitt 64 an, der bevorzugt flächig ausgebildet ist. Der - vorzugsweise flächig ausgebildete - erste Abschnitt 62 liegt in einer Ebene 72 (Fig. 39), die parallel zur Ebene 74 liegt, in der sich der zweite Abschnitt 64 erstreckt. Die Ebenen 72 und 74 haben einen lotrechten Abstand e voneinander, der etwa der lichten Weite L (Fig. 34) des Freiraums 70 entspricht. Der zweite Abschnitt 64 erstreckt sich im Wesentlichen über die Höhe des Klemmkörpers 10 und liegt benachbart zu diesem, wobei der flächig ausgeführte Abschnitt so viel seitlichen Abstand zum Klemmkörper 10 hat, dass der Klemmkörper ohne Behinderung durch das Einlegeteil 60 um seine Verschwenkachse 26 frei drehen kann.

Der benachbart zum Klemmkörper 10 liegende flächige Abschnitt 64 greift mit einem Fortsatz 66 in eine Ausnehmung 67 des Steges 20 ein, durch die der flächige Abschnitt 64 in seiner Lage relativ zum Klemmkörper 10 fixiert ist. Der Fortsatz 66 liegt an einer Begrenzungsfläche 68 der Ausnehmung 67 an und bestimmt den Abstand f zwischen dem Klemmkörper und dem flächigen Abschnitt 64. Der Abstand f ist so gewählt, dass der Klemmkörper 10 ohne Behinderung durch das Einlegeteil 60 um die Verschwenkachse 26 leicht drehen kann.

Das Einlegeteil 60 ist ferner mit einer Drehsicherung 59 versehen, die an einem Schenkel 21 des Bügels 19 angreift.

Im Ausführungsbeispiel ist die Drehsicherung 59 als vom Einlegeteil 60 abgebogener Sicherungsflansch 69 ausgebildet. Der Sicherungsflansch 69 greift am Bügel 19 ein und fixiert das Einlegeteil um die Drehachse 26 des Verschwenkbolzens 16. Im gezeigten Ausführungsbeispiel greift der Sicherungsflansch 69 in den Schlitz 23 des Schenkels 21 des Bügels 19 ein, vorzugsweise mit geringem Spiel oder spielfrei.

Das in den Freiraum 70 eingesetzte Einlegeteil 60 füllt den Freiraum 70 zumindest teilweise, ist somit als raumfüllendes Einlegeteil 60 gestaltet.

Das Einlegeteil 60 ist im Bereich der Vorderkante 71 über eine Höhe H in Richtung in den Freiraum 70 abgewinkelt, so dass ein von der Vorderseite 40 einzuschiebender Schneidfaden von dem abgewinkelten Abschnitt 73 nach Art eines Abweisers in Richtung auf den Klemmkörper 10 abgelenkt wird.

Das Einlegeteil 60 kann als Blechformteil, Stanzteil oder dgl. einfach gefertigt sein, wobei die Lage des Einlegeteils 60 im U-förmigen Bügel über den in der Ausnehmung 67 des Steges 20 liegenden Fortsatz 66, den Sicherungsflansch 69 und den die Öffnung 63 durchragenden Verschwenkbolzen 16 festgelegt ist.

## Patentansprüche

1. Fadenmähkopf für einen Freischneider, mit einem in einem Grundkörper (2) des Fadenmähkopfes (1) geklemmt gehaltenen, länglichen Schneidfaden (5), der durch eine Fadenöffnung (3) im Grundkörper (2) nach außen ragt und bei rotierendem Fadenmähkopf (1) eine Schnittebene (12) bestimmt, mit einer im Grundkörper (2) des Fadenmähkopfes (1) angeordneten Klemmvorrichtung (8) für den Schneidfaden (5), die einen um einen Verschwenkbolzen (16) bewegbaren Klemmkörper (10) umfasst, wobei die Verschwenkachse (26) des Verschwenkbolzens (16) in einer zur Schnittebene (12) etwa parallelen Ebene (13) liegt und der Klemmkörper (10) durch eine Klemmfeder (25) in eine Klemmstellung federbelastet ist, wobei in der Klemmstellung des Klemmkörpers (10) der Schneidfaden (5) zwischen einer Klemmfläche (28) und dem Klemmkörper (10) gehalten ist, und eine am Schneidfaden (5) wirkende Fliehkraft (F) den in Klemmstellung liegenden Klemmkörper (10) in seine Klemmrichtung belastet, wobei die Klemmfläche (28) und die Lagerung des Verschwenkbolzens (16) an einem gemeinsamen Bauteil (17) ausgebildet sind,
**dadurch gekennzeichnet, dass** das Bauteil (17) ein U-förmiger Bügel (19) ist, dass der Klemmkörper (10) zwischen den Schenkeln (21, 22) des Bügels (19) liegt und in den Schenkelenden der Verschwenkbolzen (16) des Klemmkörpers (10) gelagert ist, wobei an dem die Schenkel (21, 22) verbindenden Steg (20) des U-förmigen Bügels (19) die Klemmfläche (28) für den Schneidfaden (5) ausgebildet ist.

2. Fadenmähkopf nach Anspruch 1,
**dadurch gekennzeichnet, dass** der Verschwenkbolzen (16) radial in Schlitze (23) der Schenkelenden eingelegt und durch die Klemmfeder (25) in seiner Einbaulage im Bügel (19) gesichert ist.

3. Fadenmähkopf nach Anspruch 1,
**dadurch gekennzeichnet, dass** die Klemmfeder (25) eine auf dem Verschwenkbolzen (16) liegende Schenkelfeder ist, deren erster Schenkel (25a) am Klemmkörper (10) eingreift und deren zweiter Schenkel (25b) in einer am Schenkelende ausgebildeten Rastvertiefung (32) des Bügels (19) gehalten ist.

4. Fadenmähkopf nach Anspruch 3,
**dadurch gekennzeichnet, dass** die Rastvertiefung (32) in der Stirnseite (33) des freien Endes des Schenkels (21) des Bügels (19) ausgebildet ist.

5. Fadenmähkopf nach Anspruch 1,
**dadurch gekennzeichnet, dass** am Bügel (19) ein Anschlag (34).zur Begrenzung der Drehbewegung des Klemmkörpers (10) vorgesehen ist, wobei der Anschlag (34) als am Schenkel (21) angeformte Biegelasche (35) ausgebildet sein kann.

6. Fadenmähkopf nach Anspruch 3,
**dadurch gekennzeichnet, dass** die Klemmfeder (25) zwischen den Schenkeln (21, 22) des Bügels (19) angeordnet ist.

7. Fadenmähkopf nach Anspruch 6,
**dadurch gekennzeichnet, dass** der Klemmkörper (10) außermittig zwischen den Schenkeln (21, 22) liegt.

8. Fadenmähkopf nach Anspruch 7,
**dadurch gekennzeichnet, dass** ein am Grundkörper (2) des Fadenmähkopfes (1) vorgesehenes Wandelement (30) des Grundkörpers (2) in den U-förmigen Bügel (19) der Klemmvorrichtung (8) einragt.

9. Fadenmähkopf nach Anspruch 7,
**dadurch gekennzeichnet, dass** in einem Freiraum (70) zwischen dem Klemmkörper (10) und einem Schenkel (21, 22) des Bügels (19) ein raumfüllendes Einlegeteil (60) gehalten ist.

10. Fadenmähkopf nach Anspruch 9,
**dadurch gekennzeichnet, dass** das Einlegeteil (60) ein dreidimensionales Blechformteil ist, welches vom Verschwenkbolzen (16) durchragt und mit einer Drehsicherung (59) am Bügel (19) festgelegt ist.

11. Fadenmähkopf nach Anspruch 10,
**dadurch gekennzeichnet, dass** die Drehsicherung (59) als vom Einlegeteil (60) abgebogener Sicherungsflansch (69) ausgebildet ist, der in den Schlitz (23) des Schenkels (21, 22) des Bügels (19) eingreift.

12. Fadenmähkopf nach Anspruch 9,
**dadurch gekennzeichnet, dass** das Einlegeteil (60) mit einem ersten Abschnitt (62) flächig an einem Schenkel (21) des Bügels (19) anliegt und mit einem zweiten Abschnitt (64) eng benachbart zum Klemmkörper (10) liegt.

13. Fadenmähkopf nach Anspruch 3,
**dadurch gekennzeichnet, dass** der Verschwenkbolzen (16) einen Endabschnitt (15) aufweist, der über einen Schenkel (21, 22) des Bügels (19) hinausragt und die Klemmfeder (25) auf dem Endabschnitt (15) außerhalb des Bügels (19) angeordnet ist.

14. Fadenmähkopf nach Anspruch 1,
**dadurch gekennzeichnet, dass** die Klemmfläche (28) des Bügels (19) in einer Höhe mit der Unterkante der Fadenöffnung (3) liegt.

15. Fadenmähkopf nach Anspruch 1,
**dadurch gekennzeichnet, dass** die Fadenöffnung (3) durch eine in einer Umfangswand (37) des Grundkörpers (2) gehaltene Austrittshülse (7) gebildet ist.

16. Fadenmähkopf nach Anspruch 15,
**dadurch gekennzeichnet, dass** die Austrittshülse (7) mit einem Rand (38) in eine Aufnahme (39) am Grundkörper (2) eingreift.

17. Fadenmähkopf nach Anspruch 1,
**dadurch gekennzeichnet, dass** der Klemmkörper (10) in mindestens einer Seitenfläche eine Gewicht reduzierende Ansenkung (42) aufweist.

18. Fadenmähkopf nach Anspruch 17,
**dadurch gekennzeichnet, dass** die Ansenkung (42) als Bohrung (43) ausgebildet ist.

19. Fadenmähkopf nach Anspruch 18,
**dadurch gekennzeichnet, dass** die Bohrung (43) eine durchgehende Bohrung ist, deren Bohrungsachse (44) parallel zum Verschwenkbolzen (16) liegt.

20. Fadenmähkopf nach Anspruch 1,
**dadurch gekennzeichnet, dass** der Bügel (19) aus Metall besteht und aus einem Metallstreifen gebogen sein kann.

## Claims

1. String cutting head for a string trimmer, having an elongated cutting string (5) held clamped in a base body (2) of the string cutting head (1), which cutting string (5) projects outwards through a string opening (3) in the base body (2) and, when the string cutting head (1) is rotating, defines a cutting plane (12), having a clamping device (8) arranged in the base body (2) of the string cutting head (1) for the cutting string (5), said clamping device (8) comprising a clamping body (10) which can be moved around a pivot bolt (16), wherein the pivot axis (26) of the pivot bolt (16) lies in a plane (13) approximately parallel to the cutting plane (12), and the clamping body (10) is spring-loaded into a clamping position by a clamping spring (25), wherein in the clamping position of the clamping body (10) the cutting string (5) is held between a clamping area (28) and the clamping body (10), and a centrifugal force (F) acing on the cutting string (5) loads the clamping body (10) lying in the clamping position into its clamping direction, wherein the clamping area (28) and the bearing of the pivot bolt (16) are formed on a common component (17),
**characterised in that** the component (17) is a U-shaped bracket (19), the clamping body (10) lies between the legs (21, 22) of the bracket (19), and the pivot bolt (16) of the clamping body (10) is mounted in the leg ends, wherein the clamping area (28) for the cutting string (5) is formed on the web (20), connecting the legs (21, 22), of the U-shaped bracket (19).

2. String cutting head according to claim 1,
**characterised in that** the pivot bolt (16) is inserted radially into slots (23) of the leg ends and secured by the clamping spring (25) in its incorporation position in the bracket (19).

3. String cutting head according to claim 1,
**characterised in that** the clamping spring (25) is a leg spring lying on the pivot bolt (16), of which the first leg (25a) engages on the clamping body (10) and of which the second leg (25b) is held in a detent depression (32) of the bracket (19) formed at the leg end.

4. String cutting head according to claim 3,
**characterised in that** the detent depression (32) is formed in the front face (33) of the free end of the leg (21) of the bracket (19).

5. String cutting head according to claim 1,
**characterised in that** a stop (34) is provided on the bracket (19) to limit the rotation movement of the clamping body (10), wherein the stop (34) can be formed as a bending lug (35) formed on the leg (21).

6. String cutting head according to claim 3,
**characterised in that** the clamping spring (25) is arranged between the legs (21, 22) of the bracket (19).

7. String cutting head according to claim 6,
**characterised in that** the clamping body (10) lies off-centre between the legs (21, 22).

8. String cutting head according to claim 7,
**characterised in that** a wall element (30) of the base body (2) provided on the base body (2) of the string cutting head (1) projects into the U-shaped bracket (19) of the clamping device (8).

9. String cutting head according to claim 7,
**characterised in that** a space-filling insert part (60) is held in a free space (70) between the clamping body (10) and a leg (21, 22) of the bracket (19).

10. String cutting head according to claim 9,
**characterised in that** the insert part (60) is a three-dimensional sheet metal part, through which the pivot bolt (16) projects, and which is fixed with anti-rotation means (59) on the bracket (19).

11. String cutting head according to claim 10,
**characterised in that** the anti-rotation means (59) is designed as a securing flange (69) curving away from the insert part (60), said securing flange (69) engaging in the slot (23) of the leg (21, 22) of the bracket (19).

12. String cutting head according to claim 9,
**characterised in that** the insert part (60) lies with a first portion (62) planar against a leg (21) of the bracket (19) and with a second portion (64) tightly adjacent to the clamping body (10).

13. String cutting head according to claim 3,
**characterised in that** the pivot bolt (16) has an end portion (15) which projects beyond a leg (21, 22) of the bracket (19) and the clamping spring (25) is arranged on the end portion (15) outside of the bracket (19).

14. String cutting head according to claim 1,
**characterised in that** the clamping area (28) of the bracket (19) lies at the height of the lower edge of the string opening (3).

15. String cutting head according to claim 1,
**characterised in that** the string opening (3) is formed by an outlet sleeve (7) held in a peripheral wall (37) of the base body (2).

16. String cutting head according to claim 15,
**characterised in that** the outlet sleeve (7) engages with an edge (38) into a receiving area (39) on the base body (2).

17. String cutting head according to claim 1,
**characterised in that** the clamping body (10) has a weight reducing countersink (42) in at least one side area.

18. String cutting head according to claim 17,
**characterised in that** the countersink (42) is formed as a bore (43).

19. String cutting head according to claim 18,
**characterised in that** the bore (43) is a continuous bore, of which the bore axis (44) lies parallel to the pivot bolt (16).

20. String cutting head according to claim 1,
**characterised in that** the bracket (19) is made of metal and can be bent from a metal strip.

## Revendications

1. Tête faucheuse à fil pour une débroussailleuse, avec un fil de coupe oblong (5) qui est maintenu par serrage dans un corps de base (2) de la tête faucheuse à fil (1), qui dépasse vers l'extérieur par une ouverture pour fil (3) prévue dans le corps de base (2), et qui, quand la tête (1) tourne, définit un plan de coupe (12), avec un dispositif de serrage (8) pour le fil de coupe (5), qui est disposé dans le corps de base (2) de la tête faucheuse à fil (1) et qui comprend un corps de serrage (10) mobile autour d'un pivot (16), étant précisé que l'axe de pivotement du pivot (26) se trouve dans un plan (13) à peu près parallèle au plan de coupe (12) et que le corps de serrage (10) est contraint par ressort dans une position de serrage par un ressort de serrage (25), étant précisé que dans la position de serrage du corps de serrage (10), le fil de coupe (5) est maintenu entre une surface de serrage (28) et le corps de serrage (10) et qu'une force centrifuge (F) qui agit au niveau du fil de coupe (5) contraint le corps de serrage (10), qui se trouve en position de serrage, dans son sens de serrage, étant précisé que la surface de serrage (28) et le montage du pivot (16) sont formés sur un composant commun (17),
**caractérisée en ce que** le composant (17) est un étrier en U (19), **en ce que** le corps de serrage (10) se trouve entre les branches (21, 22) de l'étrier (19), et dans les extrémités de branches est monté le pivot (16) du corps de serrage (10), étant précisé que sur la branche centrale (20) de l'étrier en U (19) qui relie les branches (21, 22) est formée la surface de serrage (28) pour le fil de coupe (5).

2. Tête faucheuse à fil selon la revendication 1,
**caractérisée en ce que** le pivot (16) est inséré radialement dans des fentes (23) des extrémités de branches et est bloqué dans sa position de montage dans l'étrier (19) par le ressort de serrage (25).

3. Tête faucheuse à fil selon la revendication 1,
**caractérisée en ce que** le ressort de serrage (25) est un ressort à branches qui se trouve sur le pivot (16) et dont une première branche (25a) pénètre au niveau du corps de serrage (10) tandis que sa seconde branche (25b) est maintenue dans un cran d'arrêt (32) de l'étrier (19) formé sur l'extrémité de branche.

4. Tête faucheuse à fil selon la revendication 3,
**caractérisée en ce que** le cran d'arrêt (32) est formé dans le côté frontal (33) de l'extrémité libre de la branche (21) de l'étrier (19).

5. Tête faucheuse à fil selon la revendication 1,
**caractérisée en ce qu'**il est prévu sur l'étrier (19) une butée (34) pour limiter le mouvement de rotation du corps de serrage (10), étant précisé que la butée (34) peut être conçue comme une languette flexible (35) rapportée sur la branche (21).

6. Tête faucheuse à fil selon la revendication 3,
**caractérisée en ce que** le ressort de serrage (25) est disposé entre les branches (21, 22) de l'étrier (19).

7. Tête faucheuse à fil selon la revendication 6,
**caractérisée en ce que** le corps de serrage (10) est disposé entre les branches (21, 22) de manière excentrée.

8. Tête faucheuse à fil selon la revendication 7,
**caractérisée en ce qu'**un élément formant paroi (30) du corps de base (2), prévu sur le corps de base (2) de la tête faucheuse à fil (1), dépasse dans l'étrier en U (19) du dispositif de serrage (8).

9. Tête faucheuse à fil selon la revendication 7,
**caractérisée en ce qu'**une pièce d'insertion de remplissage d'espace (60) est maintenue dans un espace libre (70) entre le corps de serrage (10) et une branche (21, 22) de la branche (19).

10. Tête faucheuse à fil selon la revendication 9,
**caractérisée en ce que** la pièce d'insertion (60) est une pièce en tôle profilée en trois dimensions qui est traversée par le pivot (16) et qui est immobilisée sur l'étrier (19) à l'aide d'un élément de blocage de rotation (59).

11. Tête faucheuse à fil selon la revendication 10,
**caractérisée en ce que** l'élément de blocage de rotation (59) est conçu comme une bride de blocage (69) qui est repliée à partir de la pièce d'insertion (60) et qui pénètre dans la fente (23) de la branche (21, 22) de l'étrier (19).

12. Tête faucheuse à fil selon la revendication 9,
**caractérisée en ce que** la pièce d'insertion (60) est appliquée à plat contre une branche (21) de l'étrier (19), avec une première partie (62), et se trouve tout près du corps de serrage (10), avec une seconde partie (64).

13. Tête faucheuse à fil selon la revendication 3,
**caractérisée en ce que** le pivot (16) comporte une partie d'extrémité (15) qui dépasse d'une branche (21, 22) de l'étrier (19), et le ressort de serrage (25) est disposé sur ladite partie d'extrémité (15) à l'extérieur de l'étrier (19).

14. Tête faucheuse à fil selon la revendication 1,
**caractérisée en ce que** la surface de serrage (28) de l'étrier (19) se trouve à la hauteur du bord inférieur de l'ouverture pour fil (3).

15. Tête faucheuse à fil selon la revendication 1,
**caractérisée en ce que** l'ouverture pour fil (3) est formée par un manchon de sortie (7) maintenu dans une paroi périphérique (37) du corps de base (2).

16. Tête faucheuse à fil selon la revendication 15,
**caractérisée en ce que** le manchon de sortie (7) pénètre avec un bord (38) dans un logement (39) prévu sur le corps de base (2).

17. Tête faucheuse à fil selon la revendication 1,
**caractérisée en ce que** le corps de serrage (10) comporte dans au moins une surface latérale une fraisure d'allégement (42).

18. Tête faucheuse à fil selon la revendication 17,
**caractérisée en ce que** la fraisure (42) est conçue comme un perçage (43).

19. Tête faucheuse à fil selon la revendication 18,
**caractérisée en ce que** le perçage (43) est un perçage traversant dont l'axe (44) est parallèle au pivot (16).

20. Tête faucheuse à fil selon la revendication 1,
**caractérisée en ce que** l'étrier (19) est en métal et peut être plié à partir d'une bande de métal.
